# EUROPEAN PATENT APPLICATION

(11) **EP 4 443 542 A2**
(43) Date of publication of application: **09.10.2024**
(21) Application number: 24158890.4
(22) Date of filing: 21.02.2024
(51) Int. Cl.: H01M 4/134, H01M 4/36, H01M 4/38, H01M 4/62, H01M 10/0562, H01M 10/052, H01M 4/02

(54) **NEGATIVE ELECTRODE ACTIVE MATERIAL LAYER AND SOLID-STATE SECONDARY BATTERY**

(30) Priority: 05.04.2023 JP 2023061781
(71) Applicant: TOYOTA JIDOSHA KABUSHIKI KAISHA, Toyota-shi, Aichi-ken, 471-8571 (JP)
(72) Inventor: FURUYA, Ryosuke, Toyota-shi, 471-8571 (JP)
(74) Representative: D Young & Co LLP

(57) **Abstract**

An object of the present disclosure is to provide a negative electrode active material layer, in which electrical conductivity of silicon active material particles is improved by decreasing the amount of oxygen atoms in the silicon active material particles while electrical resistance is less likely to deteriorate even when charging capacity of a battery is low, and a solid-state secondary battery comprising such a negative electrode active material layer. The negative electrode active material layer of the present disclosure contains silicon active material particles and solid electrolyte particles, wherein an amount of oxygen atoms in the silicon active material particles is less than 5.0% by mass, and an average particle size of the solid electrolyte particles is 1.0 µm or less and/or a ratio of an average particle size of the solid electrolyte particles relative to an average particle size of the silicon active material particles is 0.9 or less.

## Description

### FIELD

The present disclosure relates to a negative electrode active material layer and a solid-state secondary battery.

### BACKGROUND

In recent years, there has been ongoing development of batteries. For example, in the automotive industry, the development of batteries for use in electric vehicles or hybrid vehicles has been advancing. Silicon is known as an active material used in batteries.

Silicon active materials have a large theoretical capacity and are effective in high energy densification of batteries. However, silicon active materials have a problem of large expansion during charging. In response, it is known that expansion during charging can be suppressed by using a silicon clathrate active material as a silicon active material.

For example, PTL 1 discloses an all-solid-state battery comprising a positive electrode layer, a solid electrolyte layer, and a negative electrode layer laminated in this order, wherein the negative electrode layer contains a negative electrode active material comprising a silicon clathrate type II crystal phase, a restraining pressure of 0 MPa or more and less than 5 MPa is applied to the all-solid-state battery in the laminating direction, and when A is a capacity ratio of the negative electrode capacity relative to the positive electrode capacity, the capacity ratio A is 2.5 or greater and 4.8 or less.

PTL 2 discloses an all-solid-state battery comprising a positive electrode layer, a solid electrolyte layer, and a negative electrode layer laminated in this order, wherein the negative electrode layer contains a negative electrode active material comprising a silicon clathrate type II crystal phase, a restraining pressure of 0 MPa or more and less than 5 MPa is applied to the all-solid-state battery in the laminating direction, and a specific surface area of the negative electrode active material is 8 m²/g or more and 17 m²/g or less.

### [CITATION LIST]

### [PATENT LITERATURE]

[PTL 1] Japanese Unexamined Patent Publication (Kokai) No. 2022-092723
[PTL 2] Japanese Unexamined Patent Publication (Kokai) No. 2022-092725

### SUMMARY

### [TECHNICAL PROBLEM]

Since silicon active material particles have a large expansion during charging, as described above, the contraction during discharging is also large. Thus, there is a problem that in the negative electrode active material containing the silicon active material particles, the contact state between particles constituting the negative electrode active material layer is deteriorated by the contraction of the silicon active material particles during discharging, thereby increasing the electrical resistance in the negative electrode active material layer. In this regard, the present inventors have discovered that when an amount of oxygen atoms in the silicon active material particles is small, the problem is significant, and by using solid electrolyte particles having a small particle size, such a problem can be suppressed.

An object of the present disclosure is to provide a negative electrode active material layer, in which electrical conductivity of silicon active material particles is improved by decreasing the amount of oxygen atoms in the silicon active material particles while electrical resistance is less likely to deteriorate even when charging capacity of a battery is low (= low charging state), and a solid-state secondary battery comprising such a negative electrode active material layer.

### [SOLUTION TO PROBLEM]

The present inventors have discovered that the above object can be achieved by the following means.

### <Aspect 1>

A negative electrode active material layer, containing silicon active material particles and solid electrolyte particles, wherein
an amount of oxygen atoms in the silicon active material particles is less than 5.0% by mass, and
an average particle size of the solid electrolyte particles is 1.0 µm or less, and/or a ratio of an average particle size of the solid electrolyte particles relative to an average particle size of the silicon active material particles is 0.9 or less.

### <Aspect 2>

The negative electrode active material layer according to Aspect 1, wherein an average particle size of the solid electrolyte particles is 1.0 µm or less.

### <Aspect 3>

The negative electrode active material layer according to Aspect 2, wherein the average particle size of the solid electrolyte particles is 0.01 µm or more and 0.5 µm or less.

### <Aspect 4>

The negative electrode active material layer according to Aspect 1, wherein a ratio of an average particle size of the solid electrolyte particles relative to an average particle size of the silicon active material particles is 0.9 or less.

### <Aspect 5>

The negative electrode active material layer according to Aspect 4, wherein the ratio of an average particle size of the solid electrolyte particles relative to an average particle size of the silicon active material particles is 0.01 or greater and 0.5 or less.

### <Aspect 6>

The negative electrode active material layer according to any one of Aspects 1 to 5, wherein the amount of oxygen atoms in the silicon active material particles is 1.0% by mass or greater and less than 5.0% by mass.

### <Aspect 7>

The negative electrode active material layer according to any one of Aspects 1 to 6, wherein the silicon active material particles are silicon clathrate active material particles.

### <Aspect 8>

A solid-state secondary battery, comprising the negative electrode active material layer according to any one of Aspects 1 to 7.

### [ADVANTAGEOUS EFFECTS OF INVENTION]

According to the present disclosure, a negative electrode active material layer, in which electrical conductivity of silicon active material particles is improved by decreasing the amount of oxygen atoms in the silicon active material particles while electrical resistance is less likely to deteriorate even when charging capacity of a battery is low (= low charging state), and a solid-state secondary battery comprising such a negative electrode active material layer can be provided.

### BRIEF DESCRIPTION OF DRAWINGS

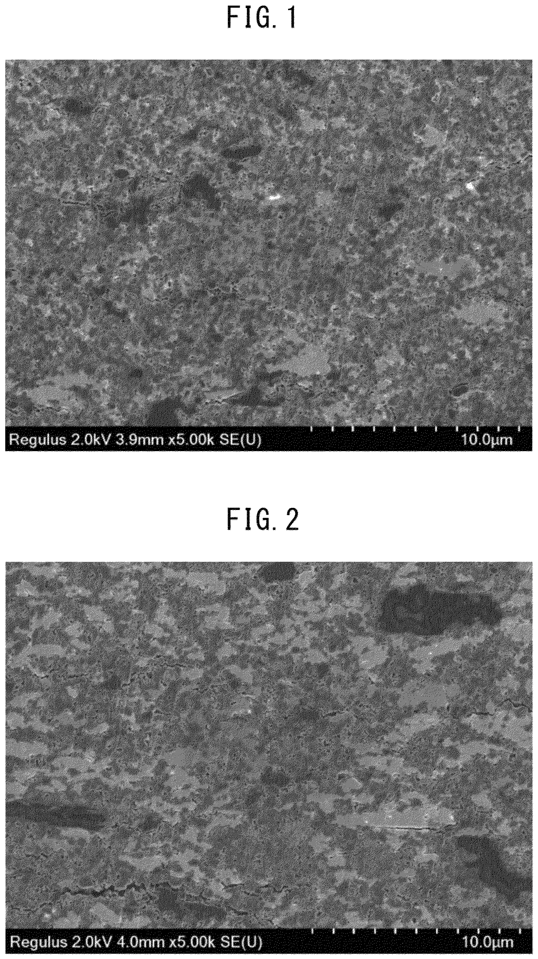

FIG. 1 is an image of a negative electrode active material layer observed using a scanning electron microscope (SEM) when the average particle size of solid electrolyte particles is 0.1 µm (the ratio thereof relative to the average particle size of silicon active material particles is 0.083).
FIG. 2 is an image of a negative electrode active material layer observed using a scanning electron microscope (SEM) when the average particle size of solid electrolyte particles is 1.1 µm (the ratio thereof relative to the average particle size of silicon active material particles is 0.92).

### DESCRIPTION OF EMBODIMENTS

Hereinafter, embodiments of the present disclosure will be described in detail. Note that the present disclosure is not limited by the following embodiments, and various modifications can be made within the scope of the disclosure.

### <Negative electrode active material layer>

The negative electrode active material layer of the present disclosure contains silicon active material particles and solid electrolyte particles, wherein an amount of oxygen atoms in the silicon active material particles is less than 5.0% by mass, and an average particle size of the solid electrolyte particles is 1.0 µm or less and/or a ratio of an average particle size of the solid electrolyte particles relative to an average particle size of the silicon active material particles is 0.9 or less.

The present inventors have discovered that when the amount of oxygen atoms in the silicon active material particles is small, the problem of electrical resistance in the negative electrode active material layer increasing during discharging becomes significant.

Without intending to be bound by theory, the reason for such a significant problem is presumed as follows. Specifically, it is considered that in silicon active material particles having a relatively large amount of oxygen atoms, the silicon active material particles are relatively strongly bonded to each other via silicon oxide moieties, whereas in silicon active material particles having a small amount of oxygen atoms, such relatively strong bonds are less likely to form and as a result, when the silicon active material particles contract, the contact state between silicon active material particles tends to deteriorate.

The present inventors have unexpectedly discovered that by decreasing the average particle size of the solid electrolyte particles or by decreasing the ratio of the average particle size of the solid electrolyte particles relative to the average particle size of the silicon active material particles in the negative electrode active material layer, the problem as described above can be suppressed.

Without intending to be bound by theory, the reason therefor is presumed as follows. Specifically, it is considered that by selecting the average particle size of the solid electrolyte particles as described above, the interface between silicon active material particles and solid electrolyte particles can be increased, and the interface between silicon active material particles can be decreased, whereby the bonding strength between particles contained in the negative electrode active material layer is increased, and the problem as described above can be suppressed.

The negative electrode active material layer of the present disclosure comprises silicon active material particles and solid electrolyte particles, and optionally a conductive aid and a binder.

The mass ratio (mass of silicon active material particles: mass of solid electrolyte particles) of the silicon active material particles to the solid electrolyte particles in the negative electrode active material layer is preferably 85:15 to 30:70, and more preferably 80:20 to 40:60.

The thickness of the negative electrode active material layer may be, for example, 0.1 to 1000 µm.

### (Silicon active material particles)

The amount of oxygen atoms in the silicon active material particles of the present disclosure is less than 5.0% by mass. The amount of oxygen atoms may be 4.5% by mass or less, 4.0% by mass or less, or 3.5% by mass or less. It is preferable that the silicon active material particles have such a small amount of oxygen atoms in order to improve electrical conductivity in the silicon active material particles.

The amount of oxygen atoms in the silicon active material particles may be 0.5% by mass or greater, 1.0% by mass or greater, 1.5% by mass or greater, 2.0% by mass or greater, or 2.5% by mass or greater. It is sometimes preferable that the silicon active material particles comprise oxygen atoms in order to promote bonding between silicon active material particles.

Examples of methods of setting the amount of oxygen atoms in the silicon active material particles to less than 5.0% by mass include, but are not limited to, a method of treating surfaces of the silicon active material particles with a hydrogen halide such as hydrogen fluoride (HF). The surfaces of the silicon active material particles treated by such a method may be hydrogenated.

The method of quantifying the amount of oxygen atoms is not particularly limited. Examples thereof include a method of calculating from an analysis value obtained by elemental analysis using an oxygen/nitrogen/hydrogen (ONH) analyzer. Specifically, an EMGA-pro from HORIBA, Ltd. can be used for the measurement.

The silicon active material particles of the present disclosure are preferably silicon clathrate active material particles, and even more preferably type II silicon clathrate active material particles.

The average particle size of the silicon active material particles is not particularly limited, and may be, for example, 0.1 µm or more, 0.5 µm or more, or 1.0 µm or more. The average particle size of the silicon active material particles may be 10 µm or less, 8.0 µm or less, 6.0 µm or less, 4.0 µm or less, or 2.0 µm or less. The average particle size of the silicon active material particles relating to the present disclosure can be determined, for example, as an average value of equivalent circle diameters of the silicon active material particles in a scanning electron microscope (SEM) image.

### (Solid electrolyte particles)

The material of the solid electrolyte particles is not particularly limited, and any material that can be used as a solid electrolyte used in solid-state secondary batteries can be used. For example, the solid electrolyte particles may be of a sulfide solid electrolyte, an oxide solid electrolyte, and a polymer electrolyte, and are preferably of a sulfide solid electrolyte.

Examples of the sulfide solid electrolyte can include, but are not limited to, sulfide amorphous solid electrolytes, sulfide crystalline solid electrolytes, and argyrodite-type solid electrolytes. Specific examples of the sulfide solid electrolyte include, but are not limited to, Li₂S-P₂S₅-based (such as Li₇P₃S₁₁, Li₃PS₄, and Li₈P₂S₉), Li₂S-SiS₂, LiI-Li₂S-SiS₂, LiI-Li₂S-P₂S₅, LiI-LiBr-Li₂S-P₂S₅, Li₂S-P₂S₅-GeS₂ (such as Li₁₃GeP₃S₁₆ and Li₁₀GeP₂S₁₂), LiI-Li₂S-P₂O₅, LiI-Li₃PO₄-P₂S₅, and Li₇₋ₓPS₆₋ₓClₓ; and combinations thereof.

Examples of the oxide solid electrolyte include, but are not limited to, Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, and Li₃₊ₓPO₄₋ₓNₓ (LiPON).

The sulfide solid electrolyte and the oxide solid electrolyte may be glass, or may be crystalline glass (glass ceramic).

Examples of the polymer electrolyte include, but are not limited to, polyethylene oxide (PEO), polypropylene oxide (PPO), and copolymers thereof.

The average particle size of the solid electrolyte particles may be 0.01 µm or more. The average particle size of the solid electrolyte particles may be 1.0 µm or less, 0.9 µm or less, 0.8 µm or less, 0.7 µm or less, 0.6 µm or less, or 0.5 µm or less. In the present disclosure, the average particle size of the solid electrolyte particles can be determined, for example, as an average value of equivalent circle diameters of the solid electrolyte particles in a scanning electron microscope (SEM) image.

The ratio (particle size ratio) of the average particle size of the solid electrolyte particles relative to the average particle size of the silicon active material particles may be 0.9 or less, or may be 0.01 or greater and 0.5 or less.

### (Conductive aid)

The conductive aid is not particularly limited. For example, the conductive aid may be, but is not limited to, a carbon material such as VGCF (vapor grown carbon fiber) or carbon nanotube fiber or a metal material.

### (Binder)

The binder is not particularly limited. For example, the binder may be, but is not limited to, a material such as a vinylidene fluoride (co)polymer, acrylonitrile-butadiene rubber (ABR), butadiene rubber (BR), polytetrafluoroethylene (PTFE), or styrene-butadiene rubber (SBR), or a combination thereof.

### <Method for manufacturing negative electrode active material layer>

The method of the present disclosure for manufacturing a negative electrode active material layer can comprise mixing silicon active material particles, solid electrolyte particles, and an organic solvent; and drying a slurry obtained by the mixing.

The above descriptions relating to the negative electrode active material layer of the present disclosure can be referenced regarding the silicon active material particles and the solid electrolyte particles.

Examples of the organic solvent can include nonpolar solvents, such as heptane, xylene, and toluene; and polar solvents, such as ester-based solvents, tertiary amine-based solvents, ether-based solvents, thiol-based solvents, and ketone-based solvents. The organic solvent is preferably a polar solvent, more preferably a ketone solvent, and even more preferably butyl butyrate.

### <Solid-state secondary battery>

The solid-state secondary battery of the present disclosure comprises the negative electrode active material layer of the present disclosure. The solid-state secondary battery of the present disclosure may comprise a negative electrode current collector layer, the negative electrode active material layer of the present disclosure, a solid electrolyte layer, a positive electrode active material layer, and a positive electrode current collector layer in this order. The solid-state secondary battery of the present disclosure may be restrained by restraining members such as endplates from both sides in the laminating direction of the above layers.

A "solid-state battery" relating to the present disclosure means a battery using at least a solid electrolyte as the electrolyte, and therefore the solid-state battery may use a combination of a solid electrolyte and a liquid electrolyte as the electrolyte. In addition, the solid-state battery of the present disclosure may be an all-solid-state battery, i.e., a battery using only a solid electrolyte as the electrolyte.

Since the solid-state secondary battery of the present disclosure comprises the negative electrode active material layer of the present disclosure, electrical conductivity of the silicon active material particles is improved by decreasing the amount of oxygen atoms in the silicon active material particles while electrical resistance is less likely to deteriorate even when charging capacity of the battery is low (= low charging state)

### (Negative electrode current collector layer)

The material used in the negative electrode current collector layer is not particularly limited. Any material that can be used as a negative electrode current collector for batteries can be appropriately adopted, and may be, for example, but is not limited to, stainless steel (SUS), aluminum, copper, nickel, iron, titanium, carbon, or a resin current collector.

The shape of the negative electrode current collector layer is not particularly limited. Examples thereof can include foil-like, plate-like, and mesh-like. Among these, foil-like is preferable.

### (Negative electrode active material layer)

The above descriptions relating to the negative electrode active material layer of the present disclosure can be referenced regarding the negative electrode active material layer.

### (Solid electrolyte layer)

The solid electrolyte layer comprises at least a solid electrolyte. In addition to the solid electrolyte, the solid electrolyte layer may comprise a binder, as needed. The above descriptions relating to the negative electrode active material layer of the present disclosure can be referenced regarding the solid electrolyte and the binder.

The solid electrolyte layer may be a layer impregnated with an electrolytic solution having lithium-ion conducting properties.

The electrolytic solution preferably contains supporting salt of the electrolytic solution and a solvent. Examples of the supporting salt (lithium salt) of the electrolytic solution having lithium-ion conducting properties include inorganic lithium salts such as LiPF₆, LiBF₄, LiClO₄, and LiAsF₆; and organic lithium salts such as LiCF₃SO₃, LiN(CF₃SO₂)₂, LiN(C₂F₅SO₂)₂, LiN(FSO₂)₂, and LiC(CF₃SO₂)₃. Examples of the solvent used in the electrolytic solution include cyclic esters (cyclic carbonates) such as ethylene carbonate (EC), propylene carbonate (PC), and butylene carbonate (BC); and chain esters (chain carbonates) such as dimethyl carbonate (DMC), diethyl carbonate (DEC), and ethyl methyl carbonate (EMC). The electrolytic solution preferably contains two or more solvents.

The thickness of the solid electrolyte layer is, for example, 0.1 to 1000 µm. The thickness of the solid electrolyte layer is preferably 0.1 to 300 µm, and particularly preferably 0.1 to 100 µm.

### (Positive electrode active material layer)

The positive electrode active material layer is a layer containing a positive electrode active material, and optionally a solid electrolyte, a conductive aid, and a binder.

When the positive electrode active material layer contains a solid electrolyte, the mass ratio (mass of positive electrode active material: mass of solid electrolyte) of the positive electrode active material to the solid electrolyte in the positive electrode active material layer is preferably 85:15 to 30:70, and more preferably 80:20 to 40:60.

The material of the positive electrode active material is not particularly limited. For example, the positive electrode active material may be, but is not limited to, lithium cobalt oxide (LiCoO₂), lithium nickel oxide (LiNiO₂), lithium manganese oxide (LiMn₂O₄), LiCo_{1/3}Ni_{1/3}Mn_{1/3}O₂, or a heteroelement-substituted Li-Mn spinel having a composition represented by Li₁₊ₓMn_{2-x-y}M_{y}O₄ (M is one or more metallic elements selected from Al, Mg, Co, Fe, Ni, and Zn).

The positive electrode active material can comprise a covering layer. The covering layer is a layer containing a material that has lithium-ion conducting performance, has low reactivity with the positive electrode active material and the solid electrolyte, and can maintain the form of a covering layer that does not flow even when brought into contact with the active material or the solid electrolyte. Specific examples of the material constituting the covering layer can include, but are not limited to, Li₄Ti₅O₁₂, Li₃PO₄, and Li_{6-(4-x)b}(Ti₁₋ₓAlₓ)_{b}F₆ (0 < x < 1, 0 < b ≤ 1.5), in addition to LiNbO₃.

Examples of the shape of the positive electrode active material include particulate. The average particle size (D50) of the positive electrode active material is not particularly limited, and is, for example, 10 nm or more, and may be 100 nm or more. The average particle size (D50) of the positive electrode active material is, for example, 50 µm or less, and may be 20 µm or less. The average particle size (D50) can be calculated from measurements with, for example, a laser diffraction particle size distribution analyzer or a scanning electron microscope (SEM).

The above descriptions relating to the negative electrode active material layer can be referenced regarding the solid electrolyte, the conductive aid, and the binder.

The thickness of the positive electrode active material layer is, for example, 0.1 µm or more and 1000 µm or less.

### (Positive electrode current collector layer)

The material and the shape used for the positive electrode current collector layer are not particularly limited, and can be referenced from the above descriptions relating to the negative electrode current collector layer of the present disclosure. Among these, the material of the positive electrode current collector layer is preferably aluminum. The shape thereof is preferably foil-like.

### EXAMPLES

### <<Production of solid-state secondary battery>>

Each example of the solid-state secondary battery was produced as follows.

### <Production of silicon active material particles>

### (Example 1)

As a silicon (Si) source, Si powder was prepared. The Si source and lithium (Li) metal were weighed at a molar ratio of Li/Si = 4.0 and mixed in a mortar in an argon atmosphere to obtain a lithium-silicon (LiSi) alloy. The obtained LiSi alloy was reacted with ethanol in an argon atmosphere and then treated with hydrogen fluoride (HF) to obtain Si powder having primary particles with voids therein, i.e., Si powder having a porous structure.

A sodium-silicon (NaSi) alloy was manufactured using the obtained Si powder and sodium hydride (NaH) as a sodium (Na) source. Note that the NaH used was preliminarily washed with hexane. The Na source and the Si source were weighted so that the molar ratio was 1.05: 1.00, and were mixed using a cutter mill. The mixture was heated under the conditions of 300°C and 60 h in an argon atmosphere in a heating furnace to obtain a powdered NaSi alloy.

The obtained NaSi alloy was heated under the conditions of a heating temperature of 270°C and a heating time of 120 h in an argon atmosphere to remove Na to obtain the silicon active material particles having a clathrate type II crystal phase of Example 1.

### <Production of negative electrode laminated body>

0.13 g of multi-walled carbon nanotubes (MWCNT), 1 g of silicon active material particles, 1.2 g of sulfide solid electrolyte particles (average particle size of 0.1 µm), and 0.8 g of a 5-wt% diisobutyl ketone solution of a polyvinylidene fluoride-hexafluoropropylene copolymer (PVDF-HFP) were added to 2.7 g of diisobutyl ketone and dispersed for 10 min using ultrasonic waves having an amplitude of 40 µm and a frequency of 20 kHz to obtain a negative electrode composite slurry. The obtained slurry was applied to a roughened nickel (Ni) foil at a gap size of 100 µm and dried for 30 min on a hot plate heated to 100°C, whereby a negative electrode active material layer was formed on a negative electrode current collector layer to obtain a negative electrode laminated body.

### <Production of solid electrolyte layer>

0.4 g of sulfide solid electrolyte particles and 0.05 g of a 5-wt% heptane solution of acrylonitrile butadiene rubber (ABR) were added to 0.8 g of heptane and dispersed for 10 min with ultrasound to obtain a solid electrolyte slurry. The obtained slurry was applied to a stainless steel foil at a gap size of 50 µm and dried for 30 min on a hot plate heated to 100°C to form a solid electrolyte layer.

### <Production of positive electrode laminated body>

2 g of lithium nickel-cobalt-manganese oxide, 0.03 g of multi-walled carbon nanotubes (MWCNT), 0.3 g of sulfide solid electrolyte particles, and 0.3 g of a 5-wt% butyl butyrate solution of PVDF-HFP were added in 1 g of butyl butyrate and dispersed for 10 min with ultrasound to obtain a positive electrode composite slurry. The obtained slurry was applied to an aluminum (Al) foil at a gap size of 100 µm and dried for 30 min on a hot plate heated to 100°C to form a positive electrode active material layer on a positive electrode current collector layer to obtain a positive electrode laminated body.

### <Battery assembly>

A solid electrolyte layer was overlapped on the negative electrode laminated body and roll-pressed at a linear pressure of 3 t/cm at room temperature. A solid electrolyte layer was overlapped on the positive electrode laminated body and roll-pressed at a linear pressure of 4 t/cm at 170°C. Each was punched into a size of 1 cm², and the solid electrolyte layers were overlapped and bonded, whereby a solid-state secondary battery was obtained.

### (Example 2)

Except that solid electrolyte particles having an average particle size of 0.8 µm were used in the production of the negative electrode laminated body, the negative electrode active material layer of Example 2 was obtained in the same manner as in Example 1.

### (Comparative Example 1)

Except that solid electrolyte particles having an average particle size of 1.1 µm were used in the production of the negative electrode laminated body, the negative electrode active material layer of Comparative Example 1 was obtained in the same manner as in Example 1.

### (Comparative Example 2)

Except that a treatment with HF was not carried out in the production of the silicon active material particles, the negative electrode active material layer of Comparative Example 2 was obtained in the same manner as in Comparative Example 1.

### (Comparative Example 3)

Except that solid electrolyte particles having an average particle size of 2.2 µm were used in the production of the negative electrode laminated body, the negative electrode active material layer of Comparative Example 3 was obtained in the same manner as in Example 1.

### <Evaluation>

### (Amount of oxygen atoms)

The amount of oxygen atoms was calculated from an analysis value obtained by elemental analysis using an oxygen/nitrogen/hydrogen (ONH) analyzer (EMGA-pro from HORIBA, Ltd.).

### (Average particle size)

The average particle size was determined as an average value of equivalent circle diameter of particles in a scanning electron microscope (SEM) image. The results are shown in Table 1.

### (Electrical resistance)

The produced battery was charged at constant current and constant voltage (CCCV) at a rate of 1/10 C to 4.35 V, and then discharged at CCCV at a rate of 1/3 C to 3.35 V. Further discharging was then carried out at 7 C, and electrical resistance was calculated from the voltage change and the current value over a period of 10 s. The results are shown in Table 1.

### (Restraining pressure fluctuation amount)

The restraining pressure fluctuation was calculated by subtracting the initial restraining pressure from the maximum load recorded by the load cell at the time of initial charging and dividing the value by the initial charging capacity. The results are shown in Table 1.

### (Electrode strength)

The densified negative electrode laminated body was punched into a 1.2-cm² piece, attached with 1.0-cm² double-sided tape, and pulled using a tensile tester until the negative electrode active material layer was broken. The load at break was taken as the electrode strength. The results are shown in Table 1.

**[Table 1]**

| | Surface condition of silicon active material particles | Amount of oxygen atoms wt% | Average particle size µm | | Particle size ratio (solid electrolyte particles/silicon active material particles) | Restraining pressure fluctuation amount MPa/mAh | Electrical resistance Ω·cm² | | Electrode strength N/cm² |
|---|---|---|---|---|---|---|---|---|---|
| | | | Silicon active material particles | Solid electrolyte particles | | | SOC 70% | SOC 30% | |
| Example 1 | Si-H | 3 | 1.2 | 0.1 | 0.083 | 0.2 | 33 | 55 | 40 |
| Example 2 | Si-H | 3 | 1.2 | 0.8 | 0.67 | 0.2 | 35 | 57 | 30 |
| Comparative Example 1 | Si-H | 3 | 1.2 | 1.1 | 0.92 | 0.2 | 30 | 70 | 15 |
| Comparative Example 2 | Si-O | 5 | 1.2 | 1.1 | 0.92 | 0.3 | 42 | 88 | 30 |
| Comparative Example 3 | Si-H | 3 | 1.2 | 2.2 | 1.8 | 0.3 | 35 | 120 | 5 |

### <Results>

As shown in Table 1, the batteries of the Examples, in which the amount of oxygen atoms, the average particle size of the solid electrolyte particles, and the particle size ratio (average particle size of solid electrolyte particles/average particle size of silicon active material particles) were set within the ranges of the present disclosure, had lower electrical resistances than the batteries of the Comparative Examples. In addition, the battery of Example 1, in which the average particle size of the solid electrolyte particles and the particle size ratio (average particle size of solid electrolyte particles/average particle size of silicon active material particles) were further decreased, had a higher electrode strength than the battery of Example 2.

## Claims

1. A negative electrode active material layer, containing silicon active material particles and solid electrolyte particles, wherein
an amount of oxygen atoms in the silicon active material particles is less than 5.0% by mass, and
an average particle size of the solid electrolyte particles is 1.0 µm or less, and/or a ratio of an average particle size of the solid electrolyte particles relative to an average particle size of the silicon active material particles is 0.9 or less.

2. The negative electrode active material layer according to claim 1, wherein an average particle size of the solid electrolyte particles is 1.0 µm or less.

3. The negative electrode active material layer according to claim 2, wherein the average particle size of the solid electrolyte particles is 0.01 µm or more and 0.5 µm or less.

4. The negative electrode active material layer according to claim 1, wherein a ratio of an average particle size of the solid electrolyte particles relative to an average particle size of the silicon active material particles is 0.9 or less.

5. The negative electrode active material layer according to claim 4, wherein the ratio of an average particle size of the solid electrolyte particles relative to an average particle size of the silicon active material particles is 0.01 or greater and 0.5 or less.

6. The negative electrode active material layer according to claim 1, wherein the amount of oxygen atoms in the silicon active material particles is 1.0% by mass or greater and less than 5.0% by mass.

7. The negative electrode active material layer according to claim 1, wherein the silicon active material particles are silicon clathrate active material particles.

8. A solid-state secondary battery, comprising the negative electrode active material layer according to any one of claims 1 to 7.
